# EUROPEAN PATENT APPLICATION

(11) **EP 4 617 799 A1**
(43) Date of publication of application: **17.09.2025**
(21) Application number: 24217136.1
(22) Date of filing: 03.12.2024
(51) Int. Cl.: G05B 15/02, F24F 8/10, F24F 110/50

(54) **GENERATIVE ARTIFICIAL INTELLIGENCE INDOOR AIR CLEANING SYSTEM**

(30) Priority: 15.03.2024 TW 113109801
(71) Applicant: Microjet Technology Co., Ltd., Hsinchu (TW)
(72) Inventor: Mou, Hao-Jan, Hsinchu (TW); Wu, Chin-Chuan, Hsinchu (TW); Huang, Chi-Feng, Hsinchu (TW)
(74) Representative: Uexküll & Stolberg

(57) **Abstract**

A generative artificial intelligence indoor air cleaning system (A) is disclosed and includes a storage center (1), an air quality detector (2), an application software (3), a calculation center (4) and an gas purification device hardware (5). The storage center (1) collects, stores and forms a big data database including professional generated data and user generated data. The application software (3) inputs the professional generated data and the user generated data to be stored in the storage center (1). The calculation center (4) includes a generative artificial intelligence model. The professional generated data and the user generated data stored are captured by the calculation center (4) through Internet of Things and processed through deep learning to form automatically-generated data. The gas purification device hardware (5) receives a control command according to the automatically-generated data generated by the calculation center (4) to regulate an activation operation for circulation and filtration, thereby gas state in the indoor field reaches a clean room requirement.

## Description

### FIELD OF THE INVENTION

The present disclosure relates to an indoor air cleaning system, and more particularly to a generative artificial intelligence indoor air cleaning system, which is combined with a generative artificial intelligence model disposed therein to detect, locate and circulate air pollution in an indoor field, so as to reach a clean room requirement of ZAPClean Room 1∼9.

### BACKGROUND OF THE INVENTION

In recent years, modern people are placing increasing importance on the quality of the air in their surroundings. For example, carbon monoxide, carbon dioxide, volatile organic compounds (VOC), PM2.5, nitric oxide, sulfur monoxide and even the suspended particles contained in the air are exposed in the environment to affect the human health, and even endanger the life seriously. Therefore, the quality of environmental air has attracted the attention of various countries. At present, how to detect the air quality and avoid the harm is a crucial issue that urgently needs to be solved. However, it is difficult to have the surveillance and control the indoor air quality. Besides the outdoor air quality, the indoor air-conditioning conditions and the pollution sources are the major factors affecting the indoor air quality. It is necessary to intelligently and quickly detect indoor air pollution sources in various indoor fields, effectively remove the indoor air pollution to form a clean and safe breathing gas state, and monitor indoor air quality in real time anytime, anywhere. Therefore, an indoor air cleaning system is provided and disposed in an indoor field to detect, locate and circulate the air pollution. The entire system is equipped with air detectors and an intelligent cloud to form an intelligent linkage system. A control command is transmitted through communication transmission to control the air-pollution-filtering treatment operations of the gas purification device hardware, so that gas state in the indoor filed can reach a clean room requirement of ZAPClean Room 1∼9.

Furthermore, in order to implement the indoor air cleaning system in the indoor field with an optimized number, an optimized performance control and an optimized noise reduction control of gas purification device hardware, and a minimized one-time installation cost, it needs to be verified through huge amounts of data and experimented repeatedly to calculate the optimized planning setting. Whereby, such a system can be implemented very well in general indoor home life. That is the main subject of research and development of the present disclosure.

### SUMMARY OF THE INVENTION

One object of the present disclosure is to provide a generative artificial intelligence indoor air cleaning system. By combining an indoor air cleaning system for the application of residential indoor living environments with a generative artificial intelligence model, the system allows to plan an optimized number, an optimized performance control and an optimized noise reduction control of gas purification device hardware, and a minimized installation cost of the indoor air cleaning system, which is applied and disposed in an indoor field to detect, locate, circulate air pollution, and achieve the clean room requirement of ZAPClean Room 1~9.

Accordingly, a generative artificial intelligence indoor air cleaning system is provided in the present disclosure, and the system includes a storage center, an air quality detector, an application software, a calculation center and an gas purification device hardware. The storage center collects information data of an indoor air cleaning system to form a big data database including professional generated data and user generated data. The at least one air quality detector detects air pollution in an outdoor field and an indoor field of buildings to output air pollution data, and transmits the air pollution data to the storage center through an Internet of Things (IoT) to form the user generated data. The application software inputs the information data of the indoor air cleaning system and transmitting the information data of the indoor air cleaning system through the Internet of Things (IoT) to be stored in the storage center. The calculation center includes a generative artificial intelligence (GAI) model, captures the professional generated and the user generated data stored in the storage center through the Internet of Things (IoT), processes through deep learning and analyzes data to form automatically-generated data. The at least one gas purification device hardware is disposed in the indoor field of the buildings and includes at least one fan at least one filtration element. The at least one gas purification device hardware receives the automatically-generated data generated by the calculation center through the Internet of Things (IoT), and a control command is intelligently selected and issued accordingly to regulate an activation operation of the at least one fan of the at least one gas purification device hardware, whereby the air pollution in the indoor field is guided to pass through the filtration element for circulation and filtration, thereby gas state in the indoor field is cleaned to reach a clean room requirement.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a block diagram illustrating a generative artificial intelligence indoor air cleaning system according to an embodiment of the present disclosure; and
FIG. 2 is a benefits diagram illustrating the generative artificial intelligence indoor air cleaning system according to the embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

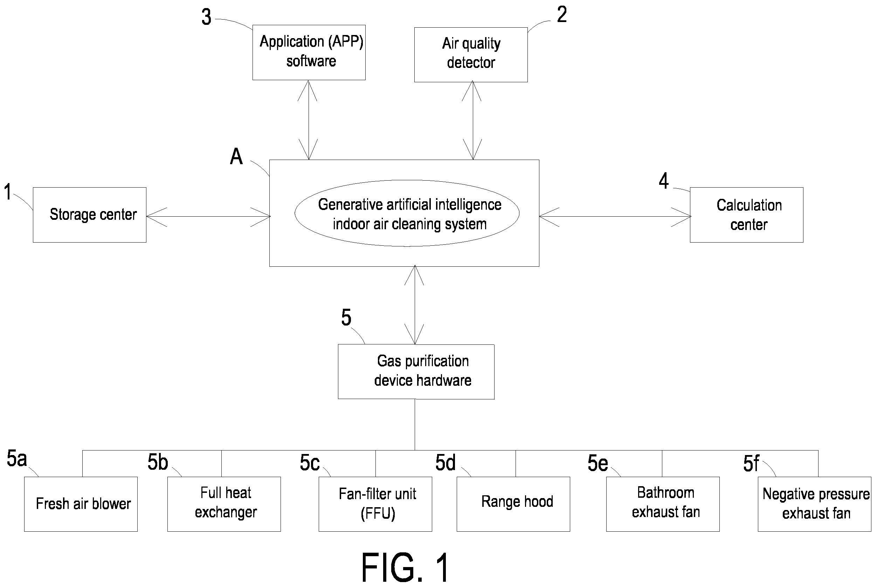

Please refer to FIG. 1. The present disclosure provides a generative artificial intelligence indoor air cleaning system A, mainly including a storage center 1, at least one air quality detector 2, an application (APP) software 3, a calculation center 4 and at least one gas purification device hardware 5.

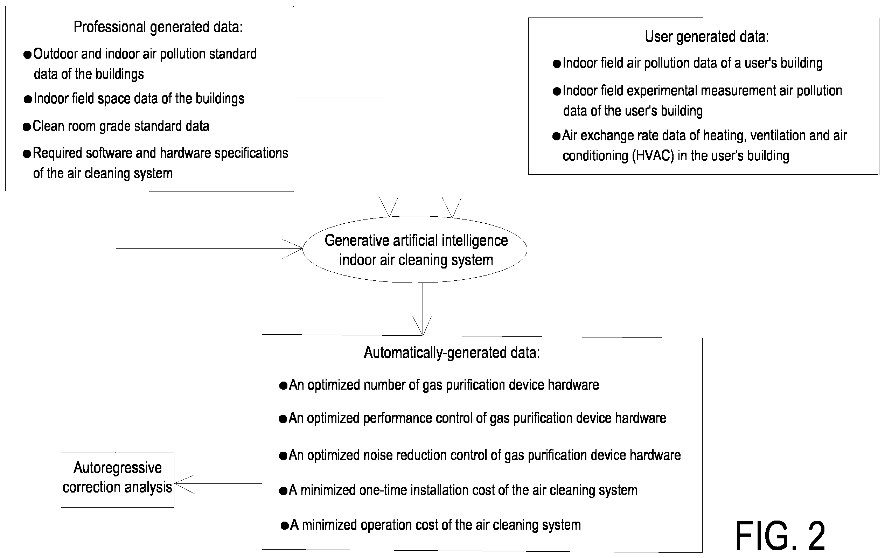

In the embodiment, the storage center 1 collects information data of an indoor air cleaning system to form a big data database including professional generated data and user generated data. Notably, the information data of the indoor air cleaning system can refer to spatial parameters of the system implementation environment field, data parameters for detecting air pollution, reference safety value parameters, clean room grade comparison parameters, software and hardware specifications and control parameters of gas purification device hardware, and other information data used for reference, but not limited thereto. Furthermore, the information data of the indoor air cleaning system also refers to all system-related research data, historical data and application data for generative AI machine learning models. Preferably but not exclusively, in the embodiment, the professional generated data includes outdoor and indoor air pollution standard data (e.g., air pollution properties, or concentration safety values) of the buildings, indoor field space data (e.g., building size and proportions, usage functions, or environmental ventilation, comfort parameters for temperature control) of the buildings, clean room grade standard data (e.g., the comparison table of ZAPClean Room 1-9), and required software and hardware specifications (e.g., clean air delivery rate CADR of fans, or filter specifications) of the air cleaning system. Preferably but not exclusively, in the embodiment, the user generated data includes indoor field air pollution data (e.g., real-time detection data of the air quality detector 2) of a user's building, indoor field experimental measurement air pollution data (e.g., the actual air pollution data detected in user's indoor field by the inspection unit) of the user's building, and air exchange rate data (e.g., the indoor and outdoor carbon dioxide comparison data instantly detected in the user's environment by the air quality detector 2) of heating, ventilation and air conditioning (HVAC) in the user's building. In the embodiment, the air quality detector 2 detects air pollution in an outdoor field and an indoor field of buildings to output air pollution data, and transmits the air pollution data to the storage center 1 through an Internet of Things (IoT) to form the user generated data. In the embodiment, the application (APP) software 3 inputs the related information data of the indoor air cleaning system and transmits the information data of the indoor air cleaning system through the Internet of Things (IoT) to be stored in the storage center 1. In the embodiment, the calculation center 4 includes a generative artificial intelligence (GAI) model. Preferably but not exclusively, the generative artificial intelligence (GAI) model includes one selected from the group consisting of the OpenAI API artificial intelligence model, Azure artificial intelligence model, Gemini artificial intelligence model, AWS artificial intelligence model, IBM Watson artificial intelligence model and a combination thereof. The professional generated and the user generated data stored in the storage center 1 are captured by the generative artificial intelligence (GAI) model through the Internet of Things (IoT), and the generative artificial intelligence (GAI) model processes through deep learning and analyzes data to form automatically-generated data, as shown in FIG. 2. That is to say, the relevant the information data of the indoor air cleaning system including the professional generated data and the user generated data are inputted through the application (APP) software 3. Preferably but not exclusively, the professional generated data includes outdoor and indoor air pollution standard data of the buildings, indoor field space data of the buildings, clean room grade standard data, and required software and hardware specifications of the air cleaning system. Preferably but not exclusively, the user generated data includes indoor field air pollution data of a user's building, indoor field experimental measurement air pollution data of the user's building, and air exchange rate data of heating, ventilation and air conditioning (HVAC) in the user's building. The information data are stored in the storage center 1 to form the big data database with air pollution information. The user inputs required information into the system through the application (APP) software for the optimized number of gas purification device hardware, the optimized performance control of gas purification device hardware, the optimized noise reduction control of gas purification device hardware, and the minimized installation cost, and then the generative artificial intelligence (GAI) model can capture the professional generated and the user generated data, which are stored and formed by the storage center 1 collecting the information data of the indoor air cleaning system, through the Internet of Things (IoT), for basic generating, processing through deep learning and analyzing data. In that, the reality is generated and compared with a generated and trained discriminator, so as to obtain the automatically-generated data. Preferably but not exclusively, the automatically-generated data includes the optimized number of gas purification device hardware, the optimized performance control of gas purification device hardware, the optimized noise reduction control of gas purification device hardware, the minimized one-time installation cost of the air cleaning system and the minimized operation cost of the air cleaning system. In the embodiment, the generative artificial intelligence (GAI) model includes an autoregressive correction analysis mechanism, which uses the automatically-generated data for prediction, and generate new and real deep learning processing data, and the automatically-generated data are corrected to an optimization. That is to say, the authenticity of the automatically-generated data is compared to help lead the model to quickly converge in a "correct" and applicable direction, and regressed to obtain the most accurate automatically-generated data, so that the generative artificial intelligence model is led to quickly converge in a correct and applicable direction. In this way, before the implementation, the indoor air cleaning system is combined with the generative artificial intelligence platform to obtain the optimized pre-operation layout and application optimization benefits, and the indoor air cleaning system with the required specifications and cost can be really obtained, so as to be applied and disposed in an indoor field to detect, locate, and circulate air pollution. In the embodiment, the gas purification device hardware 5 is disposed in the indoor field of the buildings. Notably, the gas purification device hardware 5 can be for example one selected from the group consisting of a fresh air blower 5a, a full heat exchanger 5b, a fan-filter unit (FFU) 5c, a range hood 5d, a bathroom exhaust fan 5e, a negative pressure exhaust fan 5f and a combination thereof, but not limited thereto. Moreover, the gas purification device hardware 5 each includes at least one fan at least one filtration element. In the embodiment, the at least one gas purification device hardware 5 can receive the automatically-generated data generated by the calculation center 4 through the Internet of Things (IoT), and a control command is intelligently selected and issued in accordance with the automatically-generated data, so as to regulate an activation operation of the fan of the gas purification device hardware 5. Whereby the air pollution in the indoor field is guided to pass through the filtration element for circulation and filtration, thereby gas state in the indoor field is cleaned to reach a clean room requirement of ZAPClean Room 1∼9.

In summary, the present disclosure provides a generative artificial intelligence indoor air cleaning system. By combining an indoor air cleaning system for the application of residential indoor living environments with a generative artificial intelligence model, the system allows to plan an optimized number, an optimized performance control and an optimized noise reduction control of gas purification device hardware, and a minimized installation cost of the indoor air cleaning system. In this way, before the implementation, the indoor air cleaning system is combined with the generative artificial intelligence platform to obtain the optimized pre-operation layout and application optimization benefits, and the indoor air cleaning system with the required specifications and cost can be really obtained, so as to be applied and disposed in an indoor field to detect, locate, and circulate air pollution. The clean room requirement of ZAPClean Room 1∼9 is achieved. The present disclosure includes the industrial applicability and the inventive steps.

## Claims

1. A generative artificial intelligence indoor air cleaning system (A), **characterized by** comprising:
a storage center (1), collecting information data of an indoor air cleaning system to form a big data database including professional generated data and user generated data;
at least one air quality detector (2), detecting air pollution in an outdoor field and an indoor field of buildings to output air pollution data, and transmitting the air pollution data to the storage center (1) through an Internet of Things (IoT) to form the user generated data;
an application software (3), inputting the information data of the indoor air cleaning system and transmitting the information data of the indoor air cleaning system through the Internet of Things (IoT) to be stored in the storage center (1);
a calculation center (4), comprising a generative artificial intelligence (GAI) model capturing the professional generated and the user generated data stored in the storage center (1) through the Internet of Things (IoT), processing through deep learning and analyzing data to form automatically-generated data; and
at least one gas purification device hardware (5) disposed in the indoor field of the buildings and comprising at least one fan at least one filtration element, wherein the at least one gas purification device hardware (5) receives the automatically-generated data generated by the calculation center (4) through the Internet of Things (IoT), and a control command is intelligently selected and issued to regulate an activation operation of the at least one fan of the at least one gas purification device hardware (5), whereby the air pollution in the indoor field is guided to pass through the filtration element for circulation and filtration, thereby gas state in the indoor field is cleaned to reach a clean room requirement.

2. The generative artificial intelligence indoor air cleaning system (A) according to claim 1, wherein the gas purification device hardware (5) comprises one selected from the group consisting of a fresh air blower (5a), a full heat exchanger (5b), a fan-filter unit (FFU) (5c), a range hood (5d), a bathroom exhaust fan (5e), a negative pressure exhaust fan (5f) and a combination thereof.

3. The generative artificial intelligence indoor air cleaning system (A) according to claim 1, wherein the professional generated data includes outdoor and indoor air pollution standard data of the buildings, indoor field space data of the buildings, clean room grade standard data, and required software and hardware specifications of the air cleaning system.

4. The generative artificial intelligence indoor air cleaning system (A) according to claim 1, wherein the user generated data includes indoor field air pollution data of a user's building, indoor field experimental measurement air pollution data of the user's building, and air exchange rate data of heating, ventilation and air conditioning (HVAC) in the user's building.

5. The generative artificial intelligence indoor air cleaning system (A) according to claim 1, wherein the automatically-generated data includes an optimized number of gas purification device hardware, an optimized performance control of gas purification device hardware, an optimized noise reduction control of gas purification device hardware, a minimized one-time installation cost of the air cleaning system and a minimized operation cost of the air cleaning system.

6. The generative artificial intelligence indoor air cleaning system (A) according to claim 1, wherein the generative artificial intelligence (GAI) model includes one selected from the group consisting of the OpenAI API artificial intelligence model, Azure artificial intelligence model, Gemini artificial intelligence model, AWS artificial intelligence model, IBM Watson artificial intelligence model and a combination thereof.

7. The generative artificial intelligence indoor air cleaning system (A) according to claim 1, wherein the generative artificial intelligence (GAI) model includes an autoregressive correction analysis mechanism, which uses the automatically-generated data for prediction, and generate new and real deep learning processing data corrected to an optimization, so that the generative artificial intelligence model is led to quickly converge in a correct and applicable direction.

8. The generative artificial intelligence indoor air cleaning system (A) according to claim 3, wherein the clean room grade standard data includes a cleanliness of ZAPClean Room 1∼9.
